# EUROPEAN PATENT SPECIFICATION

(11) **EP 1 561 992 B1**
(45) Date of publication and mention of the grant of the patent: **13.05.2009**
(21) Application number: 05386003.7
(22) Date of filing: 25.01.2005
(51) Int. Cl.: F16L 59/153, F16L 11/08, F24F 13/02

(54) **Flexible air-duct with internal insulation from foamed polyethylene**
Flexible Luftleitung mit innerer Dämmung aus geschäumtem Polyäthylen
Conduit d'air flexible muni d'isolant interne en polyéthylène moussé

(30) Priority: 04.02.2004 GR 2004100038
(43) Date of publication of application: 10.08.2005
(60) Divisional application: 07015163.4
(73) Proprietor: Apostolos, Davlaras, 572 00 Langada (GR)
(72) Inventor: Apostolos, Davlaras, 572 00 Langada (GR)

(56) References cited:
- DE-U- 7 514 049
- FR-A- 2 468 063
- US-A- 3 289 703
- PATENT ABSTRACTS OF JAPAN vol. 1995, no. 10, 30 November 1995 (1995-11-30) & JP 07 174292 A (U C SANGYO KK), 11 July 1995 (1995-07-11)

## Description

The invention refers to a new type of flexible air hose having extruded polyethylene foam insulation between it's internal and external walls.

The flexible air hoses are manufactured having as a base a wire skeleton made of steel or other metal. The skeleton helicoidally distributed along the length of the hose lies between the internal and external wall of the air hose. These walls are either polyester or aluminum foils, with or without coating and color, depending on the application the hose will be used for. Because these flexible air hoses are used for hot or cold air distribution, they may carry insulation within their internal and external walls. The insulating material is usually glass wool. The insulation thickness is such, as to minimize the heat losses to or from the environment. The problem arising by using such flexible air hoses is that when the insulation is quite thick, their flexibility decreases while their weight increases. Furthermore, in cases when the flexible air hoses are used for cool air distribution in air conditioning systems, undesirable condensation of air humidity takes place on their exterior surfaces, having negative effects on their installation, especially over phony ceilings.

The proposed invention is a flexible air hose of diameters ranging from 100 to 500 mm, consisting of a spiral wire skeleton and insulating leaf of foamy polyethylene, between the interior and the exterior wall of the air hose, either made of polyester or aluminum. The advantage of this invention is that the use of insulating material made by foamy polyethylene results in the reduction of the air humidity on the exterior walls of flexible air hose. Another advantage is that the required insulation thickness for a certain application is smaller than the corresponding thickness of glass wool, for the same insulating results. This leads to weight reduction and increased air hose flexibility.

US-3,289,703 discloses a flexible hose and method of making the same wherein a coil of resilient material, such as steel wire and the like is embedded in matrix of foamed elastic material being generally in the shape of a hollow cylindrical body or tubulation. The outer and inner wall surfaces of the foamed elastic material are provided with impervious skins, such skins being produced either by suitable treatment of the hose body or by employing thin tubular jackets of solid, elastic, plastic material, such as vinyl plastic or the like. Such a flexible hose is manufactured at predetermined length through a casting method that is considered to provide for high rate mass production at a relatively low unit cost and is proposed to serve applications, such as that of the flexible hose employed in the coupling of the suction nozzle of a vacuum cleaner with the collection chamber thereof.
The contents of the above US-3,289,703 relevant to the subject-matter of the invention are appropriately incorporated in the preamble of claim 1.

DE 75 14 049 U discloses a flexible air hose made of foamy polyethylene used in air-conditioning.

According to the realization of the present invention, the flexible air hose is cylindrical, with diameters from 100 to 500 mm and various lengths, manufactured by an internal and external wall between which metal skeleton and insulating material are interfered. The metal skeleton is manufactured as a wire of thickness 0,3 - 5 mm and has helical distribution along the air hose length with spiral step of 10 - 100 mm. A foamy polyethylene leaf of thickness 0,5 - 5 mm acts as insulation. The internal and external walls of the air hose are either foils of polyester, of any coloration and having whatever internal - external coating, and thickness from 0,006 to 0,2 mm, or aluminum foils of any coloration and having whatever internal - external coating, and thickness from 0,001 to 0,2 mm. The internal and external wall of the flexible air hose can be either from the same material, that is to say polyester or aluminum, or the external from polyester and the internal from aluminum.

## Claims

1. Flexible air hose having a circular cross-section made from a layer of foamy polyethylene with an external and an internal wall surrounding said foamy polyethylene layer and a helicoidally wound metallic wire extending in between said external and internal walls of said foamy polyethylene layer along the air hose length, **characterized by that** said foamy polyethylene layer is a selected quality of extruded polyethylene foam having specific insulating properties for the minimization of losses of hot or cold air distributed through said flexible air hose and said external and internal walls are polyester or aluminium foils having selected internal and/or external coating, said external and internal walls being attached onto said foamy polyethylene layer through thermal welding, glue or high frequency processing, wherein said flexible air hose has a diameter within a range of 100-500 mm, said foamy polyethylene layer has a thickness within a range or 0.5-5 mm and said metallic wire has a thickness within a range of 0.3-5 mm and a spiral step from 10 to 100 mm.

2. Flexible air hose as claimed in above claim 1 adapted to be used for hot or cold air distribution, wherein both said external and internal walls are polyester foils having selected internal and/or external coating and a thickness ranging from 0.006 - 0.2 mm.

3. Flexible air hose as claimed in above claim 1 adapted to be used for hot or cold air distribution, wherein both said external and internal walls are aluminium foils having selected internal and/or external coating and a thickness ranging from 0.001 - 0.2 mm.

4. Flexible air hose as claimed in above claim 1 adapted to be used for hot or cold air distribution, wherein one of said external and internal walls is a polyester foil having selected internal and/or external coating and a thickness ranging from 0.006 .. 0.2 mm and the other one of said external and internal walls is an aluminium foil having selected internal and/or external coating and a thickness ranging from 0,001 o.2 mm.

## Patentansprüche

1. Flexible Luftleitung, die einen kreisförmigen Querschnitt hat, ist aus einer geschäumten Polyäthylen-Schicht konstruiert und hat eine äussere und innere Wandung, die diese geschäumte Polyäthylen-Schicht umfasst und ein spiralförmig eingewickelter mineralischer Draht, der sich zwischen der äusseren und inneren Wandung der geschäumten Polyäthylen-Schicht der Länge nach der Luftleitung ausdehnt , **dadurch gekennzeichnet dass** die geschäumte Polyäthylen-Schicht eine auserwählte Qualität von gespritzte geschäumten Polyäthylen ist, die spezielle Dämmungseigenschaften besitzt für die Minimierung der Verlusten von warme oder kalte Luft, die durch die flexible Luftleitung verteilt wird und die äussere und innere Wandungen Folies aus Polyester oder Aluminium sind, die eine auserwählte innere oder äussere Bedeckung haben, wo die äussere oder innere Wandungen an die geschäumte Polyäthylen- Schicht durch thermische Schweissung, Kleben oder Bearbeitung der höhen Häufigkeiten angepasst werden, wobei die flexible Luftleitung einen Durchmesser innerhalb eines Wertbereiches von 100-500 mm hat, die diese geschäumte Polyäthylen-Schicht innerhalb eines Wertbereiches von 0.5-5 mm hat und der mineralische Draht eine Dicke innerhalb eines Wertbereiches von 0.3-5 mm hat und das Gewinde der Spirale von 10 bis 100 mm ist.

2. Flexible Luftleitung nach der Anspruch 1 anpassend für Benutzung während der Verteilung der warmen oder kalten Luft, wobei beide äussere und innere Wandungen Folies aus Polyester sind, welche eine auserwählte äussere oder innere Bedeckung haben und eine Dicke von 0.006 bis 0.2 mm.

3. Flexible Luftleitung nach der Anspruch 1 anpassend für Benutzung während der Verteilung der warmen oder kalten Luft, wobei beide äussere und innere Wandungen Folies aus Aluminium sind, welche eine auserwählte äussere oder innere Bedeckung haben und eine Dicke von 0.001 bis 0.2 mm.

4. Flexible Luftleitung nach der Anspruch 1 anpassend für Benutzung während der Verteilung der warmen oder kalten Luft, wobei einer der äusseren und inneren Wandungen Folie aus Polyester ist , welche eine auserwählte innere oder/und äussere Bedeckung hat und eine Dicke von 0.006 bis 0.2 mm und die andere von der oben genannten äusseren oder inneren Wandungen Folie aus Aluminium ist, welche eine auserwählte innere oder/und äussere Bedeckung hat und eine Dicke von 0.001 bis 0.2 mm.

## Revendications

1. Conduit d'air flexible, lequel a une coupe transversale circulaire, fait d'une couche en polyéthylène moussé avec une paroi externe et une paroi interne qui entourent ladite couche en polyéthylène moussé et d'un fil métallique hélicoïdalement enroulé, lequel s'étend entre ladite paroi externe et ladite paroi interne de ladite couche en polyéthylène moussé tout le long du conduit d'air, **caractérisé en ce que** ladite couche en polyéthylène moussé est d'une qualité choisie de polyéthylène moussé extrudé qui a des propriétés isolantes spécifiques pour la minimalisation des pertes d'air chaud ou d'air froid qui est distribué à travers ledit conduit d'air flexible et où ladite paroi interne et paroi externe sont des feuilles de polyester ou d'aluminium qui ont un revêtement interne et externe choisi, où lesdites parois externe et interne s'adaptent sur ladite couche en polyéthylène moussé à travers un soudage thermique, ou une colle ou à travers un traitement de fréquence élevée, où ledit conduit d'air flexible a un diamètre dans un champ de valeurs de 100-500 mm, ladite couche en polyéthylène moussé a une épaisseur dans un champ de valeurs de 0.5-5 mm et ledit fil métallique a une épaisseur dans un champ de valeurs de 0.3-5 mm et un pas d'une spirale de 10 à 100 mm.

2. Conduit d'air flexible selon la Revendication 1 ci-dessus, lequel est adapté pour l'usage à la distribution d'air chaud ou froid, où les deux dites parois externe et interne sont des feuilles de polyester, lesquelles ont un revêtement interne ou même externe choisi et dont l'épaisseur varie de 0.006 à 0.2 mm.

3. Conduit d'air flexible selon la Revendication 1 ci-dessus, lequel est adapté pour l'usage à la distribution d'air chaud ou froid, où les deux dites parois externe et interne sont des feuilles d'aluminium, lesquelles ont un revêtement interne ou même externe choisi et dont l'épaisseur varie de 0.001 à 0.2 mm.

4. Conduit d'air flexible selon la Revendication 1 ci-dessus, lequel est adapté pour l'usage à la distribution d'air chaud ou froid, où l'une desdites parois externe et interne est une feuille en polyester, laquelle a un revêtement interne ou même externe choisi et une épaisseur laquelle varie de 0.006 à 0.2 mm et où l'autre desdites parois externe et interne est en feuille d'aluminium, laquelle a un revêtement interne ou même externe choisi et une épaisseur laquelle varie de 0.001 à 0.2 mm.
